(19) Europäisches Patentamt
European Patent Office
Office européen des brevets

(11) **EP 3 715 219 A1**

(12) **EUROPEAN PATENT APPLICATION**

(43) Date of publication:
**30.09.2020 Bulletin 2020/40**

(51) Int Cl.:
**B62D 6/00** *(2006.01)*     **B62D 5/00** *(2006.01)*

(21) Application number: **20166296.2**

(22) Date of filing: **27.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019065768**

(71) Applicant: **JTEKT CORPORATION**
**Chuo-ku,**
**Osaka-shi,**
**Osaka 542-8502 (JP)**

(72) Inventors:
• **KAKIMOTO, Yusuke**
  **Osaka-shi, Osaka 542-8502 (JP)**
• **NAMIKAWA, Isao**
  **Osaka-shi, Osaka 542-8502 (JP)**
• **ANRAKU, Koji**
  **Osaka-shi, Osaka 542-8502 (JP)**

(74) Representative: **Winter, Brandl, Fürniss, Hübner,**
**Röss, Kaiser, Polte - Partnerschaft mbB**
**Patent- und Rechtsanwaltskanzlei**
**Alois-Steinecker-Straße 22**
**85354 Freising (DE)**

(54) **STEERING CONTROL DEVICE**

(57) A steering control device includes a processor (1). The processor (1) is configured to calculate an axial force component and a restriction reaction force. The processor (1) is also configured to calculate target reaction torque based on a reaction force component obtained by adding the axial force component and the restriction reaction force. The processor (1) is also configured to limit an absolute value of the reaction force component to a limit value or less, the limit value being such a value that the reaction force component does not become too large.

FIG. 4

**Description**

BACKGROUND OF THE INVENTION

1. Field of the Invention

The invention relates to steering control devices.

2. Description of Related Art

A steer-by-wire steering system in which power transmission between a steering unit that is steered by a driver and a steered unit that steers steered wheels according to the steering operation by the driver is mechanically separated is known as a type of steering system. In such a steering system, a road surface reaction force etc. applied to the steered wheels is not mechanically transmitted to a steering wheel. Accordingly, some steering control devices that control this type of steering system send road surface information to the driver by applying a steering reaction force generated in consideration of the road surface information from a steering-side actuator (steering-side motor) to the steering wheel.
For example, Japanese Unexamined Patent Application Publication No. 2017-165219 (JP 2017-165219 A) discloses a steering control device that uses an axial force acting on a steered shaft coupled to the steered wheels. This steering control device calculates an angle axial force from a target steered angle according to a target steering angle of the steering wheel and calculates a current axial force from a driving current for a steered-side motor that is a driving source for a steered-side actuator. This steering control device obtains a distributed axial force in which the angle axial force and the current axial force are included at a predetermined distribution ratio and determines a steering reaction force based on the distributed axial force.
This steering control device of JP 2017-165219 A also uses an end reaction force as a reaction force that is considered when determining the steering reaction force. The end reaction force is a reaction force that reduces impact that is exerted when what is called "end hitting" occurs, namely when a rack end, which is an end of a rack shaft, hits a rack housing. This end reaction force is applied in the case where the steering angle of the steering wheel becomes larger than a steering angle threshold. The steering angle threshold is a value corresponding to an imaginary rack end position that is set closer to a neutral position than an actual rack end position where axial movement of the rack shaft is mechanically restricted. Since the end reaction force is applied, the driver is restrained from further turning the steering wheel before end hitting occurs. The impact is therefore less likely to be exerted.

SUMMARY OF THE INVENTION

In recent years, such steering control devices have been required not only to send road surface information to the driver but also to more appropriately inform the driver of the conditions of a steering system by applying a steering reaction force. It still cannot be said that the required level has been reached by the configuration of JP 2017-165219 A. A new technique is therefore required which can appropriately inform the driver not only of the steering wheel having been steered to a position near the rack end position but also of other conditions of the steering system.
The invention provides a steering control device capable of appropriately informing the driver of the conditions of a steering system.
A steering control device according to an aspect of the invention controls a steering system having a structure in which power transmission between a steering unit and a steered unit is mechanically separated, the steered unit being a unit that steers a steered wheel according to a steering operation that is input to the steering unit, the steering control device being configured to control operation of a steering-side motor provided in the steering unit such that motor torque according to target reaction torque is generated, and the target reaction torque being a target value of a steering reaction force that is a force against the steering operation that is input to the steering unit. The steering control device includes a processor. The processor is configured to calculate an axial force component corresponding to an axial force acting on a steered shaft that operated so as to steer the steered wheel. The processor is also configured to calculate an restriction reaction force to restrict a steering operation for steering the steered wheel in one direction such that a vehicle comes into a condition in which steering of the steered wheel in the one direction is restricted. The processor is also configured to calculate the target reaction torque based on a reaction force component obtained by adding the axial force component and the restriction reaction force. The processor is also configured to limit an absolute value of the reaction force component to a limit value or less, the limit value being such a value that the reaction force component does not become too large.
According to the steering control device of the above aspect of the invention, the restriction reaction force is introduced. Accordingly, a large steering reaction force can be applied when the vehicle comes into the condition in which steering of the steered wheel in one direction is restricted. The driver can thus be informed of the condition in which steering of the steered wheel in the one direction is restricted. Accordingly, in the case where the vehicle comes into the condition in which steering of the steered wheel in the one direction is restricted, the reaction force component obtained by adding the axial force component and the restriction reaction force is increased. When the target reaction torque is calculated based on such a reaction force component, the reaction force that is applied to a steering wheel may become too large. In this respect, according to the steering control device of the above aspect of the invention, the absolute value of the reaction force component is limited to the limit value or less. Accordingly, when the vehicle comes into the condition in which steering of the steered wheel in the one direction is restricted, the reaction force component is less likely to become too large, and thus the steering reaction force is also less likely to become too large.

In the steering control device according to the above aspect of the invention, the processor may be configured to, as the restriction reaction force, calculate an obstacle contact reaction force to restrict a steering operation of the steered wheel toward an obstacle when the vehicle comes into a condition in which the steered wheel is in contact with the obstacle as a result of being steered. In the steering control device according to the above aspect of the invention, the processor may be configured to, as the restriction reaction force, calculate an end reaction force that is a reaction force against further turning of the steering unit when the absolute value of a steering angle of the steering unit approaches a limit steering angle.

In the steering control device according to the above aspect of the invention, the processor may have a reaction force component adjustment map that is used to adjust the reaction force component, and the processor may be configured to set the absolute value of the reaction force component after adjustment using the reaction force component adjustment map to the limit value or less.

According to the steering control device of the above aspect of the invention, the reaction force component is adjusted using the reaction force component adjustment map. Accordingly, an optimal steering reaction force according to the specifications of the vehicle etc. can be easily realized by changing the profile of the map. The absolute value of the reaction force component is limited to the limit value or less by the reaction force component adjustment map. This restrains an increase in calculation load on the steering control device as compared to the case where, for example, a guard processing unit for limiting the absolute value of the reaction force component to the limit value or less is additionally provided.

In the steering control device according to the above aspect of the invention, the processor may be configured to adjust the limit value based on a vehicle speed. For example, when the vehicle traveling at high speeds makes a sharp turn, a road surface reaction force that is applied to the steered wheel is increased and therefore, considering the road surface reaction force, the axial force component is increased. In this case, if the absolute value of the axial force component is limited, an appropriate steering reaction force may not be able to be applied when the vehicle is in the condition in which steering of the steered wheel in one direction need not to be restricted. When the vehicle is, for example, traveling at high speeds, the vehicle is less likely to come into the condition in which steering of the steered wheel in the one direction needs to be restricted. According to the steering control device of the above aspect of the invention, the limit value may be adjusted based on the vehicle speed. Accordingly, an appropriate steering reaction force can be applied when the vehicle is not in the condition in which steering of the steered wheel in the one direction needs to be restricted.

The steering control device according to the above aspect of the invention can appropriately inform the driver of the conditions of the steering system.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic configuration diagram of a steering system;
FIG. 2 is a block diagram of a steering control device;
FIG. 3 is a block diagram of a target reaction torque calculation unit;
FIG. 4 is a block diagram of a reaction force component calculation unit;
FIG. 5 is a block diagram of an obstacle contact reaction force calculation unit; and
FIG. 6 is a graph illustrating an example of a reaction force component adjustment map.

## DETAILED DESCRIPTION OF EMBODIMENTS

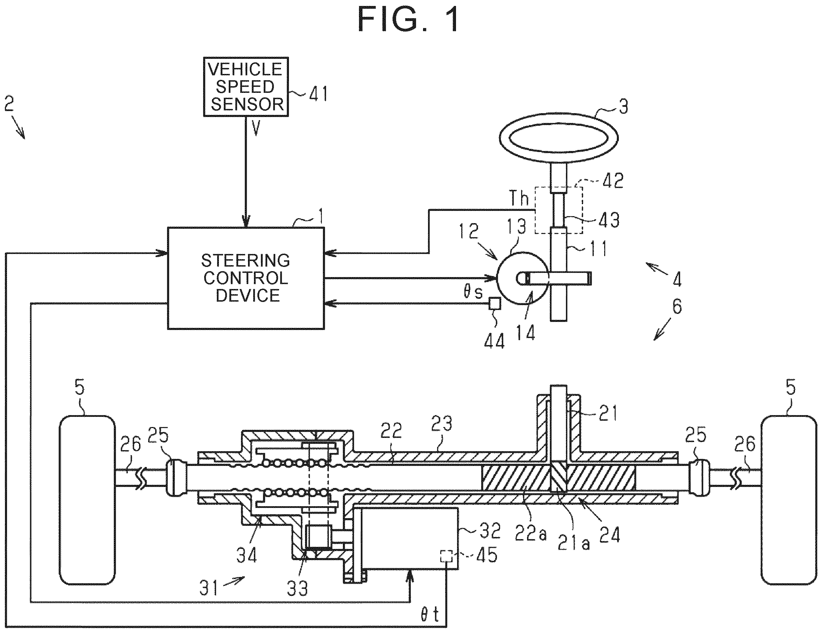

An embodiment of a steering control device will be described with reference to the drawings. As shown in FIG. 1, a steering system 2 to be controlled by a steering control device 1 of the present embodiment is configured as a steer-by-wire steering system. The steering system 2 includes a steering unit 4 and a steered unit 6. The steering unit 4 is steered by a driver via a steering wheel 3. The steered unit 6 steers steered wheels 5 according to the steering of the steering unit 4 by the driver.

The steering unit 4 includes a steering shaft 11 and a steering-side actuator 12. The steering wheel 3 is fixed to the steering shaft 11. The steering-side actuator 12 can apply a steering reaction force to the steering shaft 11. The steering-side actuator 12 includes a steering-side motor 13 and a steering-side speed reducer 14. The steering-side motor 13 is a driving source, and the steering-side speed reducer 14 reduces the rotational speed of the steering-side motor 13 to transmit the reduced rotational speed to the steering shaft 11. For example, a three-phase brushless motor is used as the steering-side motor 13 of the present embodiment.

The steered unit 6 includes a pinion shaft 21, a rack shaft 22, a rack housing 23, and a rack-and-pinion mechanism 24. The rack shaft 22 is a steered shaft coupled to the pinion shaft 21. The rack housing 23 accommodates the rack shaft 22 such that the rack shaft 22 can reciprocate therein. The rack-and-pinion mechanism 24 is composed of the pinion shaft 21 and the rack shaft 22. The pinion shaft 21 and the rack shaft 22 are disposed at a predetermined crossing angle. The pinion shaft 21 has pinion teeth 21a, and the rack shaft 22 has rack teeth 22a. The rack-and-pinion mechanism 24 is formed by the pinion teeth 21a and the rack teeth 22a meshing with each other. Tie rods 26 are coupled to respective ends of the rack shaft 22 via rack ends 25 that are ball joints. The tip ends of the tie rods 26 are coupled to knuckles, not shown, having the right and left steered wheels 5 attached thereto.

The steered unit 6 further includes a steered-side actuator 31 that applies a steered force that steers the steered wheels 5 to the rack shaft 22. The steered-side actuator 31 includes a steered-side motor 32 that is a driving source, a transmission mechanism 33, and a conversion mechanism 34. The steered-side actuator 31 transmits rotation of the steered-side motor 32 to the conversion mechanism 34 via the transmission mechanism 33 and converts the transmitted rotation into reciprocating motion of the rack shaft 22 by the conversion mechanism 34 to apply a steered force to the steered unit 6. For example, a three-phase brushless motor is used as the steered-side motor 32 of the present embodiment, a belt mechanism is used as the transmission mechanism 33, and a ball screw mechanism is used as the conversion mechanism 34.

In the steering system 2 configured as described above, the steered-side actuator 31 applies the steered force to the rack shaft 22 according to the steering operation by the driver, whereby the steered angle of the steered wheels 5 is changed. At this time, the steering-side actuator 12 applies a steering reaction force against the steering operation by the driver to the steering wheel 3.

Next, the electrical configuration of the present embodiment will be described. The steering control device 1 is connected to the steering-side motor 13 and the steered-side motor 32 to control their operation. The steering control device 1 includes a processor (central processing unit (CPU)) and a memory, and the CPU executes a program stored in the memory at predetermined calculation intervals. Various kinds of control are thus performed.

A vehicle speed sensor 41 and a torque sensor 42 are connected to the steering control device 1. The vehicle speed sensor 41 detects the vehicle speed V of the vehicle, and the torque sensor 42 detects steering torque Th applied to the steering shaft 11. The torque sensor 42 is mounted on the steering shaft 11 at a position located closer to the steering wheel 3 than a portion of the steering shaft 11 that is connected to the steering-side speed reducer 14. The torque sensor 42 detects the steering torque Th based on twisting of a torsion bar 43. A steering-side rotation sensor 44 and a steered-side rotation sensor 45 are also connected to the steering control device 1. The steering-side rotation sensor 44 detects the rotation angle $\theta s$ of the steering-side motor 13 as a relative angle in the range of 360°. The steered-side rotation sensor 45 detects the rotation angle $\theta t$ of the steered-side motor 32 as a relative angle. The detected rotation angle $\theta s$ of the steering-side motor 13 is a value indicating the steering amount of the steering unit 4, and the detected rotation angle $\theta t$ of the steered-side motor 32 is a value indicating the steered amount of the steered unit 6. For example, the detected steering torque Th and the detected rotation angles $\theta s$, $\theta t$ take positive values in the case of steering to the right and take negative values in the case of steering to the left. The steering control device 1 controls operation of the steering-side motor 13 and the steered-side motor 32 based on these various state quantities.

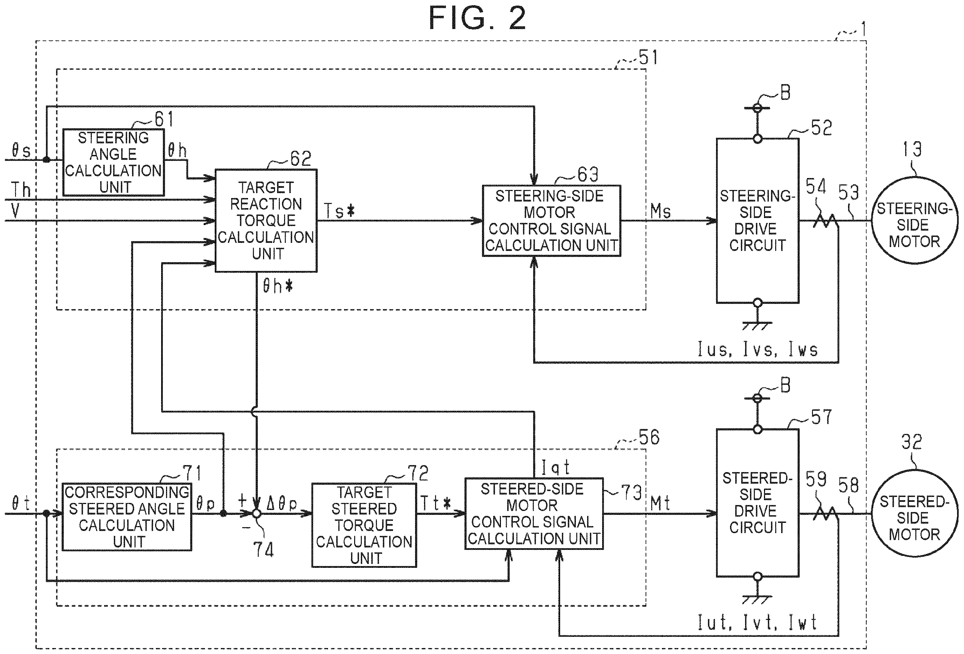

The configuration of the steering control device 1 will be described in detail. As shown in FIG. 2, the steering control device 1 includes a steering-side control unit 51 and a steering-side drive circuit 52. The steering-side control unit 51 outputs a steering-side motor control signal Ms, and the steering-side drive circuit 52 supplies driving power to the steering-side motor 13 based on the steering-side motor control signal Ms. Current sensors 54 are connected to the steering-side control unit 51. The current sensors 54 detect three-phase current values Ius, Ivs, Iws of the steering-side motor 13 flowing through connection lines 53 between the steering-side drive circuit 52 and three-phase motor coils of the steering-side motor 13. In FIG. 2, the three-phase connection lines 53 and the three-phase current sensors 54 are shown as one connection line 53 and one current sensor 54 for convenience of description.

The steering control device 1 further includes a steered-side control unit 56 and a steered-side drive circuit 57. The steered-side control unit 56 outputs a steered-side motor control signal Mt, and the steered-side drive circuit 57 supplies driving power to the steered-side motor 32 based on the steered-side motor control signal Mt. Current sensors 59 are connected to the steered-side control unit 56. The current sensors 59 detect three-phase current values Iut, Ivt, Iwt of the steered-side motor 32 flowing through connection lines 58 between the steered-side drive circuit 57 and three-phase motor coils of the steered-side motor 32. In FIG. 2, the three-phase connection lines 58 and the three-phase current sensors 59 are shown as one connection line 58 and one current sensor 59 for convenience of description. Well-known pulse width modulation (PWM) inverters having a plurality of switching elements such as field effect transistors (FETs) are used for the steering-side drive circuit 52 and the steered-side drive circuit 57 of the present embodiment. The steering-side motor control signal Ms and the steered-side motor control signal Mt are gate on and off signals that define the on and off states of each switching element.

The steering-side control unit 51 and the steered-side control unit 56 output the steering-side motor control signal Ms and the steered-side motor control signal Mt to the steering-side drive circuit 52 and the steered-side drive circuit 57, respectively, whereby driving power is supplied from an on-board power source B to the steering-side motor 13 and the steered-side motor 32. The steering-side control unit 51 and the steered-side control unit 56 thus control operation of the steering-side motor 13 and the steered-side motor 32.

First, the configuration of the steering-side control unit 51 will be described. The steering-side control unit 51 performs calculations shown in the following control blocks at predetermined calculation intervals to generate the steering-side motor control signal Ms. The steering-side control unit 51 receives the vehicle speed V, the steering torque Th, the rotation angle $\theta$s, the three-phase current values Ius, Ivs, Iws, a q-axis current value Iqt, and a corresponding steered angle $\theta$p described later. The q-axis current value Iqt is a driving current for the steered-side motor 32. The steering-side control unit 51 generates the steering-side motor control signal Ms based on these state quantities and outputs the generated steering-side motor control signal Ms.

Specifically, the steering-side control unit 51 includes a steering angle calculation unit 61, a target reaction torque calculation unit 62, and a steering-side motor control signal calculation unit 63. The steering angle calculation unit 61 calculates a steering angle $\theta$h of the steering wheel 3. The target reaction torque calculation unit 62 calculates target reaction torque Ts* that is a target value of the steering reaction force. The steering-side motor control signal calculation unit 63 outputs the steering-side motor control signal Ms.

The steering angle calculation unit 61 receives the rotation angle $\theta$s of the steering-side motor 13. The steering angle calculation unit 61 counts the number of rotations of the steering-side motor 13 from, for example, a steering neutral position to convert the rotation angle $\theta$s to an absolute angle including the range of over 360°. The steering angle calculation unit 61 then calculates the steering angle $\theta$h by multiplying the rotation angle thus converted to the absolute angle by a conversion coefficient that is based on the rotational speed ratio of the steering-side speed reducer 14. The steering angle $\theta$h thus calculated is output to the target reaction torque calculation unit 62.

The target reaction torque calculation unit 62 receives the vehicle speed V, the steering torque Th, the steering angle $\theta$h, the q-axis current value Iqt, and the corresponding steered angle $\theta$p. The target reaction torque calculation unit 62 calculates the target reaction torque Ts* based on these state quantities as described later and outputs the calculated target reaction torque Ts* to the steering-side motor control signal calculation unit 63. The target reaction torque calculation unit 62 also outputs a target steering angle $\theta$h*, which is obtained in the course of calculating the target reaction torque Ts*, to the steered-side control unit 56. The target steering angle $\theta$h* is a target value of the steering angle $\theta$h of the steering wheel 3.

The steering-side motor control signal calculation unit 63 receives the rotation angle $\theta$s and the three-phase current values Ius, Ivs, Iws in addition to the target reaction torque Ts*. The steering-side motor control signal calculation unit 63 of the present embodiment calculates a d-axis target current value Ids* on the d-axis and a q-axis target current value Iqs* on the q-axis in a dq coordinate system, based on the target reaction torque Ts*. The target current values Ids*, Iqs* indicate a target current value on the d axis and a target current value on the q axis in the dq coordinate system, respectively. The steering-side motor control signal calculation unit 63 calculates the q-axis target current value Iqs* having an absolute value that increases as the absolute value of the target reaction torque Ts* increases. In the present embodiment, the d-axis target current value Ids* is basically set to zero. The steering-side motor control signal calculation unit 63 performs current feedback control in the dq coordinate system to generate the steering-side motor control signal Ms to be output to the steering-side drive circuit 52.

Specifically, the steering-side motor control signal calculation unit 63 maps the three-phase current values Ius, Ivs, Iws to the dq coordinates based on the rotation angle $\theta$s to calculate a d-axis current value Ids and a q-axis current value Iqs. The d-axis current value Ids and the q-axis current value Iqs are actual current values of the steering-side motor 13 in the dq coordinate system. The steering-side motor control signal calculation unit 63 then calculates a target voltage value based on the current deviations on the d-axis and the q-axis such that the d-axis current value Ids follows the d-axis target current value Ids* and the q-axis current value Iqs follows the q-axis target current value Iqs*. The steering-side motor control signal calculation unit 63 generates the steering-side motor control signal Ms having a duty cycle that is based on the target voltage value.

The steering-side motor control signal Ms thus calculated is output to the steering-side drive circuit 52. The steering-side drive circuit 52 thus supplies driving power according to the steering-side motor control signal Ms to the steering-side motor 13. The steering-side motor 13 applies a steering reaction force indicated by the target reaction torque Ts* to the steering wheel 3.

Next, the steered-side control unit 56 will be described. The steered-side control unit 56 performs calculations shown in the following control blocks at predetermined calculation intervals to generate the steered-side motor control signal Mt. The steered-side control unit 56 receives the rotation angle $\theta$t, the target steering angle $\theta$h*, and the three-phase current values Iut, Ivt, Iwt of the steered-side motor 32. The steered-side control unit 56 generates the steered-side motor control signal Mt based on these state quantities and outputs the generated steered-side motor control signal Mt.

Specifically, the steered-side control unit 56 includes a corresponding steered angle calculation unit 71, a target steered torque calculation unit 72, and a steered-side motor control signal calculation unit 73. The corresponding steered angle calculation unit 71 calculates the corresponding steered angle θp that is the rotation angle of the pinion shaft 21. The target steered torque calculation unit 72 calculates the target steered torque Tt* that is a target value of the steered force. The steered-side motor control signal calculation unit 73 outputs the steered-side motor control signal Mt. In the steering system 2 of the present embodiment, the steering angle ratio, which is the ratio between the steering angle θh and the corresponding steered angle θp, is set to a constant value, and a target corresponding steered angle, which is a target value of the corresponding steered angle θp, is equal to the target steering angle 9h*.

The corresponding steered angle calculation unit 71 receives the rotation angle θt of the steered-side motor 32. The corresponding steered angle calculation unit 71 counts the number of rotations of the steered-side motor 32 from, for example, the neutral position where the vehicle travels straight to convert the received rotation angle θt to an absolute angle. The corresponding steered angle calculation unit 71 then calculates the corresponding steered angle θp by multiplying the rotation angle thus converted to the absolute angle by a conversion coefficient that is based on the reduction ratio of the transmission mechanism 33, the lead of the conversion mechanism 34, and the rotational speed ratio of the rack-and-pinion mechanism 24. That is, the corresponding steered angle θp corresponds to the steering angle θh of the steering wheel 3 on the assumption that the pinion shaft 21 is coupled to the steering shaft 11. The corresponding steered angle θp thus calculated is output to a subtractor 74 and the target reaction torque calculation unit 62. The subtractor 74 receives the target steering angle θh* in addition to the corresponding steered angle θp.

The subtractor 74 subtracts the corresponding steered angle θp from the target steering angle θh*, namely from the target corresponding steered angle, to obtain an angle deviation Δθp. The target steered torque calculation unit 72 receives the angle deviation Δθp. Based on the angle deviation Δθp, the target steered torque calculation unit 72 calculates the target steered torque Tt* as a controlled variable for causing the corresponding steered angle θp to follow the target steering angle 9h*. The target steered torque Tt* is a target value of the steered force that is applied by the steered-side motor 32. Specifically, the target steered torque calculation unit 72 calculates as the target steered torque Tt* the sum of the output values of a proportional element, an integral element, and a differential element that receive the angle deviation Δθp. That is, target steered torque calculation unit 72 calculates the target steered torque Tt* by performing steered angle feedback control that causes the actual corresponding steered angle θp to follow the target steering angle θh* that is the target corresponding steered angle.

The steered-side motor control signal calculation unit 73 receives the rotation angle θt and the three-phase current values Iut, Ivt, Iwt in addition to the target steered torque Tt*. The steered-side motor control signal calculation unit 73 calculates a q-axis target current value Iqt* on the q-axis in the dq coordinate system, based on the target steered torque Tt*. The steered-side motor control signal calculation unit 73 calculates the q-axis target current value Iqt* having an absolute value increases as the absolute value of the target steered torque Tt* increases. In the present embodiment, a d-axis target current value Idt* on the d-axis is basically set to zero. Like the steering-side motor control signal calculation unit 63, the steered-side motor control signal calculation unit 73 performs current feedback control in the dq coordinate system to generate the steered-side motor control signal Mt to be output to the steered-side drive circuit 57. The steered-side motor control signal calculation unit 73 outputs the q-axis current value Iqt, which is calculated in the course of generating the steered-side motor control signal Mt, to the target reaction torque calculation unit 62.

The steered-side motor control signal Mt thus calculated is output to the steered-side drive circuit 57. The steered-side drive circuit 57 thus supplies driving power according to the steered-side motor control signal Mt to the steered-side motor 32. The steered-side motor 32 applies a steered force indicated by the target steered torque Tt* to the steered wheels 5.

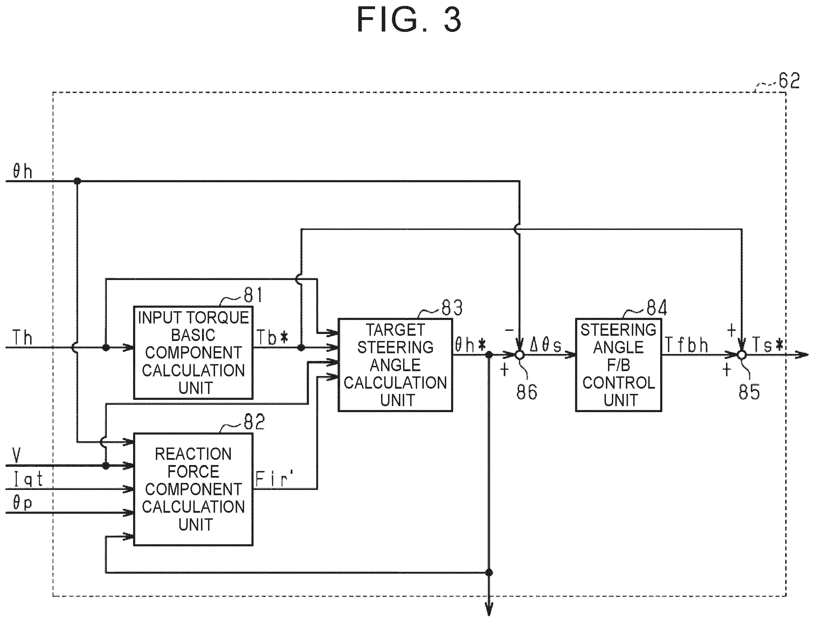

Next, the target reaction torque calculation unit 62 will be described. As shown in FIG. 3, the target reaction torque calculation unit 62 includes an input torque basic component calculation unit 81 and a reaction force component calculation unit 82. The input torque basic component calculation unit 81 calculates an input torque basic component Tb* that is a force for rotating the steering wheel 3 in the direction of the steering operation by the driver. The reaction force component calculation unit 82 calculates a reaction force component Fir' adjusted as described later. The reaction force component Fir' is a force against rotation of the steering wheel 3 caused by the steering operation by the driver. The target reaction torque calculation unit 62 further includes a target steering angle calculation unit 83 and a steering angle feedback control unit (steering angle F/B control unit) 84. The target steering angle calculation unit 83 calculates the target steering angle θh* that is a target value of the steering angle θh. The steering angle F/B control unit 84 performs a steering angle feedback calculation to calculate a steering angle feedback component (steering angle F/B component) Tfbh.

The input torque basic component calculation unit 81 receives the steering torque Th. The input torque basic component calculation unit 81 calculates the input torque basic component (reaction force basic component) Tb* having an absolute value that increases as the absolute value of the steering torque Th increases. The input torque basic component Tb* thus calculated is input to the target steering angle calculation unit 83 and an adder 85.

The reaction force component calculation unit 82 receives the vehicle speed V, the steering angle θh, the q-axis current value Iqt for the steered-side motor 32, the corresponding steered angle θp, and the target steering angle θh*. Based on these state quantities, the reaction force component calculation unit 82 calculates a reaction force component Fir' according to the axial force acting on the rack shaft 22 and outputs the calculated reaction force component Fir' to the target steering angle calculation unit 83, as described later.

The target steering angle calculation unit 83 receives the vehicle speed V, the steering torque Th, the input torque basic component Tb*, and the reaction force component Fir'. The target steering angle calculation unit 83 calculates the target steering angle θh* using a model (steering model) formula that associates input torque Tin* with the target steering angle θh*. The input torque Tin* is a value that is added the steering torque Th to the input torque basic component Tb* and subtracted the reaction force component Fir' from the sum.

$$Tin^* = C \cdot \theta h^{*\prime} + J \cdot \theta h^{*\prime\prime} \qquad (1)$$

This model formula represents the relationship between the torque of a rotating shaft that rotates with rotation of the steering wheel 3 and the rotation angle of the rotating shaft that is defined for the configuration in which the steering wheel 3 is mechanically connected to the steered wheels 5, namely the configuration in which the steering unit 4 is mechanically connected to the steered unit 6. This model formula is expressed using a viscosity coefficient C that models friction of the steering system 2 etc., and an inertia coefficient J that models inertia of the steering system 2. The viscosity coefficient C and the inertia coefficient J are variable according to the vehicle speed V The target steering angle θh* thus calculated using the model formula is output to the reaction force component calculation unit 82 in addition to a subtractor 86 and the steered-side control unit 56.

The subtractor 86 subtracts the steering angle θh from the target steering angle θh* to obtain an angle deviation Δθs. The steering angle F/B control unit 84 receives the angle deviation Δθs. Based on the angle deviation Δθs, the steering angle F/B control unit 84 calculates the steering angle F/B component Tfbh as a controlled variable for feedback controlling the steering angle θh to the target steering angle θh*. The steering angle F/B component Tfbh is a basic component of the steering reaction force that is applied by the steering-side motor 13. Specifically, the steering angle F/B control unit 84 calculates as basic reaction torque the sum of the output values of a proportional element, an integral element, and a differential element that receive the angle deviation Δθs. The steering angle F/B component Tfbh thus calculated is output to the adder 85.

The adder 85 adds the steering angle F/B component Tfbh to the input torque basic component Tb*, and the target reaction torque calculation unit 62 outputs the sum as the target reaction torque Ts*. Next, the configuration of the reaction force component calculation unit 82 will be described.

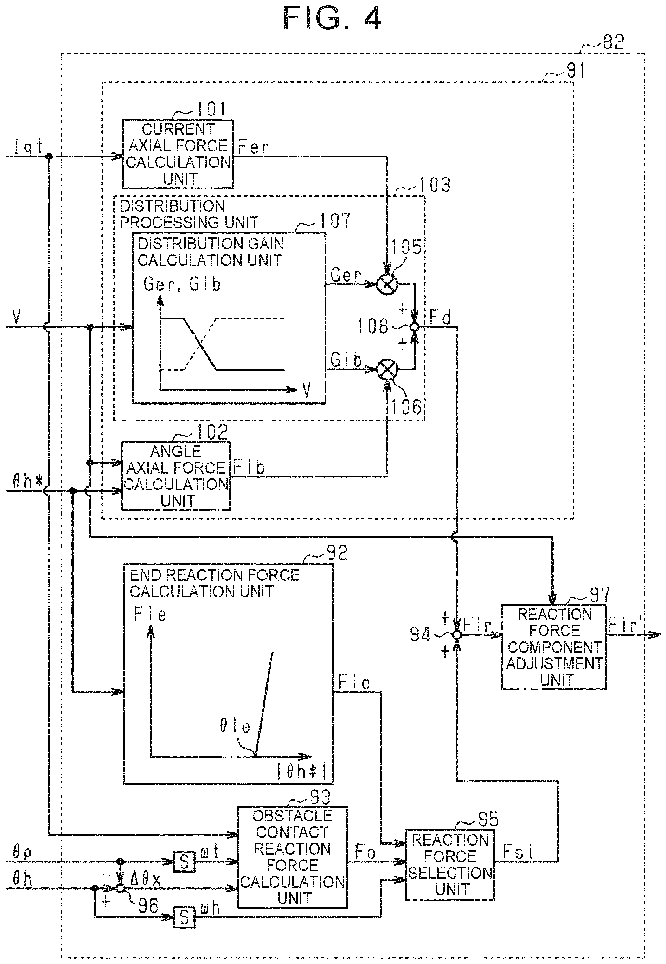

As shown in FIG. 4, the reaction force component calculation unit 82 includes a distributed axial force calculation unit 91, an end reaction force calculation unit 92, and an obstacle contact reaction force calculation unit 93. The distributed axial force calculation unit 91 calculates a distributed axial force Fd according to the axial force acting on the rack shaft 22. The end reaction force calculation unit 92 calculates an end reaction force Fie that is a reaction force against further turning of the steering wheel 3 when the absolute value of the steering angle θh of the steering wheel 3 approaches a limit steering angle. The obstacle contact reaction force calculation unit 93 calculates an obstacle contact reaction force Fo to restrict a steering operation of the steered wheel 5 toward an obstacle when the vehicle comes into the condition in which the steered wheel 5 is in contact with the obstacle such as a curb as a result of being steered. The reaction force component calculation unit 82 adds one of the end reaction force Fie and the obstacle contact reaction force Fo which has a larger absolute value to the distributed axial force Fd to obtain a reaction force component Fir. The reaction force component calculation unit 82 then adjusts the absolute value of the reaction force component Fir and outputs the resultant value as the adjusted reaction force component Fir'.

Specifically, the distributed axial force calculation unit 91 includes a current axial force calculation unit 101 and an angle axial force calculation unit 102. The current axial force calculation unit 101 calculates a current axial force Fer that is an estimated axial force. The angle axial force calculation unit 102 calculates an angle axial force Fib that is an ideal axial force. The current axial force Fer and the angle axial force Fib are calculated by the dimension of torque (N.m). The distributed axial force calculation unit 91 further includes a distribution processing unit 103. The distribution processing unit 103 calculates the distributed axial force Fd in which the angle axial force Fib and the current axial force Fer are included at a predetermined distribution ratio such that an axial force applied from the road surface to the steered wheels 5, namely road surface information transmitted from the road surface, is reflected in the distributed axial force Fd.

The current axial force calculation unit 101 receives the q-axis current value Iqt of the steered-side motor 32. The current axial force calculation unit 101 calculates the current axial force Fer reflecting the road surface information, based on the q-axis current value Iqt. The current axial force Fer is an estimated value of the axial force acting on the steered wheels 5, that is, the transmitted force transmitted to the steered wheels 5. Specifically, the current axial force calculation unit 101 calculates the current axial force Fer such that the absolute value of the current axial force Fer increases as the absolute value of the q-axis current value Iqt increases, on the assumption that the torque applied to the rack shaft 22 by the steered-side motor 32 is balanced with the torque according to the force applied from the road surface to the steered wheels 5. The current axial force Fer thus calculated is output to a multiplier 105.

The angle axial force calculation unit 102 receives the target steering angle θh* and the vehicle speed V The target steering angle θh* is the target corresponding steered angle. The angle axial force calculation unit 102 calculates the angle axial force Fib not reflecting the road surface information, based on the target steering angle θh*. The angle axial force Fib is an ideal value of the axial force acting on the steered wheels 5, namely the transmitted force transmitted to the steered wheels 5. Specifically, the angle axial force calculation unit 102 calculates the angle axial force Fib such that the absolute value of the angle axial force Fib increases as the absolute value of the target steering angle θh* increases. The angle axial force calculation unit 102 also calculates the angle axial force Fib such that the absolute value of the angle axial force Fib increases as the absolute value of the vehicle speed V increases. The angle axial force Fib thus calculated is output to a multiplier 106.

The distribution processing unit 103 receives the current axial force Fer and the angle axial force Fib in addition to the vehicle speed V The distribution processing unit 103 includes a distribution gain calculation unit 107. The distribution gain calculation unit 107 calculates distribution gains Ger, Gib based on the vehicle speed V The distribution gain calculation unit 107 of the present embodiment has a map that defines the relationship between the vehicle speed V and the distribution gains Ger, Gib. The distribution gain calculation unit 107 calculates the distribution gains Ger, Gib according to the vehicle speed V by referring to the map. The distribution gain Gib is smaller when the vehicle speed V is higher than when the vehicle speed V is lower. The distribution gain Ger is larger when the vehicle speed V is higher than when the vehicle speed V is lower. That is, the ratio of the angle axial force Fib in the distributed axial force Fd decreases as the vehicle speed V increases, and the ratio of the current axial force Fer in the distributed axial force Fd increases as the vehicle speed V increases. In the present embodiment, the values of the distribution gains Ger, Gib are set such that the sum of the distribution gains Ger, Gib is equal to "1." The calculated distribution gain Ger is output to the multiplier 105, and the calculated distribution gain Gib is output to the multiplier 106.

The distribution processing unit 103 multiplies the current axial force Fer by the distribution gain Ger in the multiplier 105, multiplies the angle axial force Fib by the distribution gain Gib in the multiplier 106, and adds the resultant products in an adder 108 to calculate the distributed axial force Fd. The distributed axial force Fd thus calculated is output to an adder 94.

The end reaction force calculation unit 92 receives the target steering angle θh* that is the target corresponding steered angle. The end reaction force calculation unit 92 has a map that defines the relationship between the target steering angle θh* and the end reaction force Fie. The end reaction force calculation unit 92 calculates the end reaction force Fie according to the target steering angle θh* by referring to the map. A threshold angle θie is set in the map. When the absolute value of the target steering angle θh* is equal to or smaller than the threshold angle θie, the end reaction force Fie calculated by the end reaction force calculation unit 92 is zero. When the absolute value of the target steering angle θh* is larger than the threshold angle θie, the end reaction force Fie calculated by the end reaction force calculation unit 92 has an absolute value larger than zero. The end reaction force Fie thus calculated is output to a reaction force selection unit 95. The end reaction force Fie is set such that when the target steering angle θh* becomes larger than the threshold angle θie by a certain amount, the end reaction force Fie has such a large absolute value that the steering wheel 3 cannot be turned any more by human power. The threshold angle θie is set to the value of the corresponding steered angle θp at an imaginary rack end position that is set closer to the neutral position than a mechanical rack end position where axial movement of the rack shaft 22 is restricted due to the rack end 25 contacting the rack housing 23.

A subtractor 96 subtracts the corresponding steered angle θp from the steering angle θh to obtain an angle deviation Δθx. The obstacle contact reaction force calculation unit 93 receives the angle deviation Δθx and a steered speed ωt in addition to the q-axis current value Iqt. The steered speed ωt is obtained by differentiating the steered angle θp. The obstacle contact reaction force calculation unit 93 of the present embodiment calculates an obstacle contact gain Go based on these state quantities and calculates the obstacle contact reaction force Fo based on the obstacle contact gain Go. The obstacle contact gain Go indicates how close the current condition of the vehicle is to the condition in which the obstacle contact reaction force Fo should be applied.

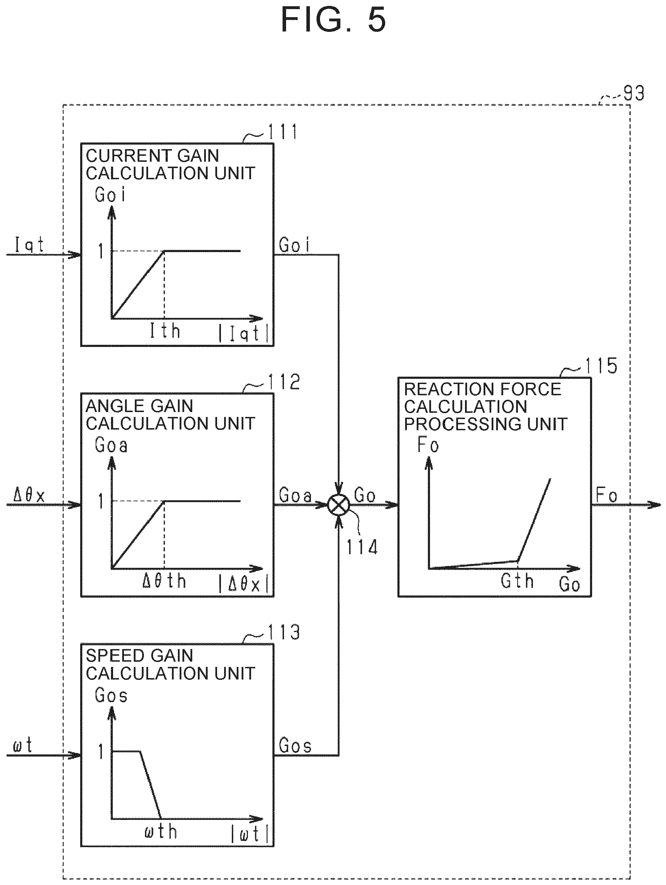

Specifically, as shown in FIG. 5, the obstacle contact reaction force calculation unit 93 includes a current gain calculation unit 111, an angle gain calculation unit 112, and a speed gain calculation unit 113. The current gain calculation unit 111 calculates a current gain Goi based on the q-axis current value Iqt. The angle gain calculation unit 112 calculates an angle gain Goa based on the angle deviation Δθx. The speed gain calculation unit 113 calculates a speed gain Gos based on the steered speed ωt.

The current gain calculation unit 111 receives the q-axis current value Iqt. The current gain calculation unit 111 has a map that defines the relationship between the absolute value of the q-axis current value Iqt and the current gain Goi. The current gain calculation unit 111 calculates the current gain Goi according to the q-axis current value Iqt by referring to the map. This map is set such that the current gain Goi is "0" when the absolute value of the q-axis current value Iqt is zero and that the current gain Goi increases as the absolute value of the q-axis current value Iqt increases. This map is also set such that the current gain Goi is "1" when the absolute value of the q-axis current value Iqt is larger than a current threshold Ith. That is, in the present embodiment, one of the conditions for determining that the current condition of the vehicle is close to the condition in which the steered wheel 5 is in contact with an obstacle as a result of being steered is that an attempt to steer the steered wheels 5 is being made. The larger the absolute value of the q-axis current value Iqt is, the closer the current condition of the vehicle is determined to be to the condition in which the steered wheel 5 is in contact with an obstacle as a result of being steered. The current threshold Ith is such a current value that the steered wheels 5 can be steered when on a normal road surface when this current value is supplied to the steered-side motor 32. The current threshold Ith is set in advance based on the results of tests, simulations, etc. The current gain Goi thus calculated is input to a multiplier 114.

The angle gain calculation unit 112 receives the angle deviation $\Delta\theta x$. The angle gain calculation unit 112 has a map that defines the relationship between the absolute value of the angle deviation $\Delta\theta x$ and the angle gain Goa. The angle gain calculation unit 112 calculates the angle gain Goa according to the angle deviation $\Delta\theta x$ by referring to the map. This map is set such that the angle gain Goa is "0" when the absolute value of the angle deviation $\Delta\theta x$ is zero and that the angle gain Goa increases as the absolute value of the angle deviation $\Delta\theta x$ increases. This map is also set such that the angle gain Goa is "1" when the absolute value of the angle deviation $\Delta\theta x$ is larger than an angle deviation threshold $\Delta\theta th$. That is, in the present embodiment, one of the conditions for determining that the current condition of the vehicle is close to the condition in which the steered wheel 5 is in contact with an obstacle as a result of being steered is that the deviation between the steering angle $\theta h$ and the corresponding steered angle $\theta p$ is large. The larger the absolute value of the angle deviation $\Delta\theta x$ is, the closer the current condition of the vehicle is determined to be to the condition in which the steered wheel 5 is in contact with an obstacle as a result of being steered. The angle deviation threshold $\Delta\theta th$ is such an angle that the steering angle $\theta h$ and the corresponding steered angle $\theta p$ can be regarded as deviated from each other even with sensor noise etc., considered. The angle deviation threshold $\Delta\theta th$ is set in advance based on the results of tests, simulations, etc. The angle gain Goa thus calculated is input to the multiplier 114.

The speed gain calculation unit 113 receives the steered speed $\omega t$. The speed gain calculation unit 113 has a map that defines the relationship between the absolute value of the steered speed $\omega t$ and the speed gain Gos. The speed gain calculation unit 113 calculates the speed gain Gos according to the steered speed $\omega t$ by referring to the map. This map is set such that the speed gain Gos is "1" when the absolute value of the steered speed $\omega t$ is zero and that the speed gain Gos decreases as the absolute value of the steered speed $\omega t$ increases. This map is also set such that the speed gain Gos is "0" when the absolute value of the steered speed $\omega t$ is larger than a speed threshold $\omega th$. That is, in the present embodiment, one of the conditions for determining that the current condition of the vehicle is close to the condition in which the steered wheel 5 is in contact with an obstacle as a result of being steered is that the steered speed $\omega t$ is low. The smaller the absolute value of the steered speed $\omega t$ is, the closer the current condition of the vehicle is determined to be to the condition in which the steered wheel 5 is in contact with an obstacle as a result of being steered. The speed threshold $\omega th$ is such a speed that the steered wheels 5 can be regarded as being steered even with view of sensor noise etc., considered. The speed threshold $\omega th$ is set in advance based on the results of tests, simulations, etc. The speed gain Gos thus calculated is input to the multiplier 114.

The obstacle contact reaction force calculation unit 93 multiplies the current gain Goi, the angle gain Goa, and the speed gain Gos in the multiplier 114 to obtain the obstacle contact gain Go that indicates how close the current condition of the vehicle is to the condition in which the obstacle contact reaction force Fo should be applied. The obstacle contact gain Go thus calculated is output to a reaction force calculation processing unit 115.

The reaction force calculation processing unit 115 has a map that defines the relationship between the obstacle contact gain Go and the obstacle contact reaction force Fo. The reaction force calculation processing unit 115 calculates the obstacle contact reaction force Fo according to the obstacle contact gain Go by referring to the map. This map is set such that the obstacle contact reaction force Fo is "0" when the obstacle contact gain Go is zero and that the obstacle contact reaction force Fo gradually increases as the obstacle contact gain Go increases. This map is also set such that once the obstacle contact gain Go become larger than a gain threshold Gth, the obstacle contact reaction force Fo increases rapidly as the obstacle contact gain Go increases. The gain threshold Gth is such a gain that the vehicle can be determined to be in the condition in which the steered wheel 5 is in contact with an obstacle as a result of being steered. The gain threshold Gth is set in advance based on the results of tests, simulations, etc. The obstacle contact reaction force Fo is set such that when the obstacle contact gain Go becomes larger than the gain threshold Gth by a certain amount, the obstacle contact reaction force Fo has such a large absolute value that the steering wheel 3 cannot be turned any more by human power.

Accordingly, in the region where the obstacle contact gain Go is equal to or smaller than the gain threshold Gth, a reaction force that is applied when only a tire part of the steered wheel 5 comes into contact with an obstacle is reproduced by the obstacle contact reaction force Fo. In the region where the obstacle contact gain Go is larger than the gain threshold Gth, a reaction force that is applied when a wheel part of the steered wheel 5 comes into contact with an obstacle is reproduced by the obstacle contact reaction force Fo. The obstacle contact reaction force Fo thus calculated is output to the reaction force selection unit 95.

As shown in FIG. 4, the reaction force selection unit 95 receives a steering speed $\omega$h in addition to the end reaction force Fie and the obstacle contact reaction force Fo. The steering speed $\omega$h is obtained by differentiating the steering angle $\theta$h. The reaction force selection unit 95 selects one of the end reaction force Fie and the obstacle contact reaction force Fo which has a larger absolute value, sets the sign of the selected reaction force, namely the direction of the selected reaction force, to the same sign as that of the steering speed $\omega$h, and outputs the resultant reaction force, namely a selected reaction force Fsl, to the adder 94.

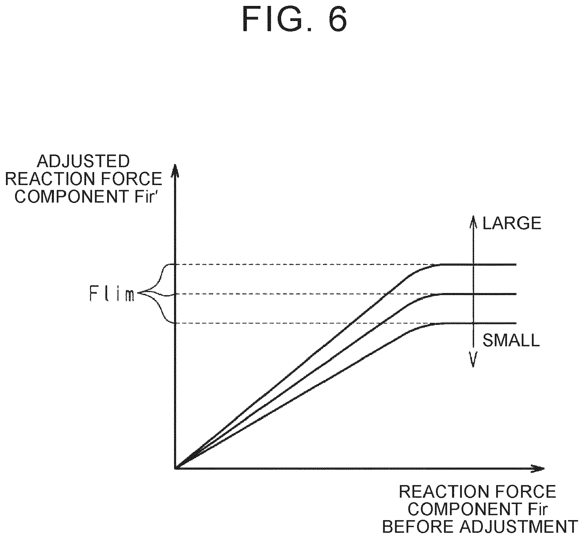

The reaction force component calculation unit 82 then adds the selected reaction force Fsl to the distributed axial force Fd in the adder 94 and outputs the sum, namely the reaction force component Fir, to a reaction force component adjustment unit 97. The reaction force component adjustment unit 97 receives the reaction force component Fir and the vehicle speed V The reaction force component adjustment unit 97 has a reaction force component adjustment map that is used to adjust the reaction force component Fir. As shown in FIG. 6, the reaction force component adjustment map is set such that the reaction force component Fir before adjustment and the adjusted reaction force component Fir' have a linear relationship in the region where the absolute value of the reaction force component Fir before adjustment is small and the region where the absolute value of the reaction force component Fir before adjustment is medium. The reaction force component adjustment map is also set such that the absolute value of the adjusted reaction force component Fir' is equal to or smaller than a predetermined limit value Flim in the region where the absolute value of the reaction force component Fir before adjustment is large. The reaction force component adjustment map of the present embodiment is also set such that the limit value Flim increases as the vehicle speed V increases. The limit value Flim is such a value that the target reaction torque Ts* that is calculated based on the adjusted reaction force component Fir' does not become too large. The limit value Flim is set in advance based on the results of tests, simulations, etc. The reaction force component adjustment unit 97 adjusts the reaction force component Fir according to the vehicle speed V by referring to the reaction force component adjustment map. The adjusted reaction force component Fir' thus calculated is output to the target steering angle calculation unit 83.

Next, functions and effects of the present embodiment will be described.

(1) The reaction force component calculation unit 82 includes the obstacle contact reaction force calculation unit 93. The obstacle contact reaction force calculation unit 93 calculates an obstacle contact reaction force to restrict a steering operation of steering the steered wheels 5 toward an obstacle, when the vehicle comes into the condition in which the steered wheel 5 is in contact with the obstacle as a result of being steered. Accordingly, a large steering reaction force can be applied when the vehicle comes into the condition in which the steered wheel 5 is in contact with an obstacle such as a curb. The driver can thus be informed of the condition in which the steered wheel 5 is in contact with an obstacle such as a curb. When the vehicle is in the condition in which the steered wheel 5 is in contact with an obstacle, the actual corresponding steered angle $\theta$p does not follow the target steering angle $\theta$h* that is the target corresponding steered angle. The target steered torque Tt* therefore increases, and the current axial force Fer based on the q-axis current value Iqt supplied to the steered-side motor 32 also increases. Accordingly, in the case where the vehicle comes into the condition in which the steered wheel 5 is in contact with an obstacle such as a curb while the vehicle is traveling at such a vehicle speed V that the distribution gain Ger is dominant, the reaction force component Fir obtained by adding the distributed axial force Fd and the obstacle contact reaction force Fo increases. If the target reaction torque Ts* is calculated based on such a reaction force component Fir, the steering reaction force that is applied to the steering wheel 3 may become too large.

In this regard, according to the present embodiment, the reaction force component calculation unit 82 limits the absolute value of the adjusted reaction force component Fir' to the limit value Flim or less and calculates the target reaction torque Ts* based on the adjusted reaction force component Fir'. Accordingly, the reaction force component Fir' is restrained from becoming too large and thus the steering reaction force is restrained from becoming too large when the vehicle comes into the condition in which the steered wheel 5 is in contact with an obstacle as a result of being steered.

(2) The reaction force component adjustment unit 97 has the reaction force component adjustment map that is used to adjust the reaction force component Fir. The reaction force component adjustment unit 97 adjusts the reaction force component Fir using the reaction force component adjustment map. Accordingly, an optimal steering reaction force according to the specifications of the vehicle etc. can be easily realized by changing the profile of the map. The absolute value of the reaction force component Fir' after adjustment using the reaction force component adjustment map is set to the limit value Flim or less. This restrains an increase in calculation load on the steering control device 1 as compared to the case where a guard processing unit for limiting the absolute value of the reaction force component Fir to the limit value Flim or less is additionally provided.

(3) The reaction force component adjustment unit 97 increases the limit value Flim as the vehicle speed V increases. For example, when the vehicle traveling at high speeds makes a sharp turn, the road surface reaction force that is applied to the steered wheels 5 is increased and therefore the current axial force Fer is increased. In this case, if the absolute value of the current axial force Fer is limited, an appropriate steering reaction force may not be able to be applied when the vehicle is in the condition in which the steered wheel 5 is not in contact with an obstacle. When the vehicle is traveling at high speeds, the vehicle is less likely to come into the condition in which steering of the steered wheel 5 is restricted as the steered wheel 5 runs over a curb, for example, even when the steered wheel 5 contacts the curb. In view of this, in the present embodiment, the limit value Flim is increased as the vehicle speed V increases. An appropriate steering reaction force can thus be applied when the vehicle is not in the condition in which the steered wheel 5 is in contact with an obstacle.

The above embodiment can be modified as follows. The above embodiment and the following modifications can be combined unless technical inconsistency arises.

In the above embodiment, the reaction force component adjustment unit 97 has the reaction force component adjustment map and adjusts the reaction force component Fir by referring to the map such that the absolute value of the adjusted reaction force component Fir' is limited to the limit value Flim or less. However, the invention is not limited to this. For example, the reaction force component adjustment unit 97 may not have the reaction force component adjustment map. Specifically, when the absolute value of the reaction force component Fir is equal to or smaller than the limit value Flim, the reaction force component adjustment unit 97 may output this reaction force component Fir as it is as the reaction force component Fir'. When the absolute value of the reaction force component Fir is larger than the limit value Flim, the reaction force component adjustment unit 97 may limit the absolute value of the reaction force component Fir to the limit value Flim or less and output the resultant reaction force component Fir as the adjusted reaction force component Fir'.

The profile of the reaction force component adjustment map of the above embodiment can be changed as appropriate. For example, the reaction force component adjustment map may be set such that the absolute value of the adjusted reaction force component Fir' is larger than the limit value Flim. In this case, the reaction force component adjustment unit 97 includes a guard processing unit that limits the absolute value of the adjusted reaction force component Fir' to the limit value Flim or less.

In the above embodiment, the limit value Flim is changed according to the vehicle speed V However, the invention is not limited to this. The limit value Flim may not be changed according to the vehicle speed V

In the above embodiment, the target reaction torque Ts* is calculated by adding the input torque basic component Tb* and the steering angle F/B component Tfbh. However, the invention is not limited to this. The manner in which the target reaction torque Ts* is calculated may be changed as appropriate. For example, the input torque basic component Tb* may be a value calculated by performing torque feedback control that causes the steering torque Th to follow the target steering torque. The steering angle F/B control may not be performed. For example, the target reaction torque Ts* may be directly calculated based on the input torque Tin*, or the target reaction torque Ts* may be directly calculated based on the reaction force component Fir. Alternatively, target steering torque may be calculated based on, for example, the reaction force component Fir, and a value obtained by performing torque feedback control that causes the steering torque Th to follow the target steering torque may be used as the target reaction torque Ts*.

In the above embodiment, the proportions of the current axial force Fer and the angle axial force Fib in the distributed axial force Fd may be changed according to a parameter other than the vehicle speed V An example of such a parameter is a drive mode indicating a set state of a control pattern for an on-board engine etc.

In the above embodiment, the obstacle contact reaction force calculation unit 93 calculates the obstacle contact reaction force Fo based on the obstacle contact gain Go that indicates how close the current condition of the vehicle is to the condition in which the obstacle contact reaction force Fo should be applied. However, the invention is not limited to this. For example, whether the vehicle is in the condition in which the obstacle contact reaction force Fo should be applied or not may be alternatively determined based on the comparison of magnitude between the q-axis current value Iqt, the angle deviation $\Delta\theta x$, and the steered speed $\omega t$ and their corresponding thresholds, and the obstacle contact reaction force Fo may be calculated according to the determination result.

In the above embodiment, the angle axial force Fib is calculated based on the target steering angle $\theta h*$ that is the target corresponding steered angle. However, the invention is not limited to this, and the angle axial force Fib may be calculated by other methods. For example, the angle axial force Fib may be calculated based on the steering angle θh and the corresponding steered angle θp or may be calculated in view of other parameters such as the steering torque Th and the vehicle speed V

In the above embodiment, the distributed axial force Fd is calculated based on the current axial force Fer and the angle axial force Fib. However, the invention is not limited to this. An axial force based on other state quantities in addition to or instead of the angle axial force Fib may be used. Examples of the axial force based on other state quantities include a vehicle state quantity axial force calculated based on the yaw rate and the lateral acceleration, an axial force based on the detection value of an axial force sensor that detects the axial force of the rack shaft 22, and an axial force based on the tire force acting on the steered wheels 5.

In the above embodiment, the angle gain Goa is calculated based on the angle deviation Δθx between the steering angle θh and the corresponding steered angle θp. However, the invention is not limited to this. For example, the angle gain may be calculated based on the angle deviation between the target corresponding steered angle and the corresponding steered angle θp.

In the above embodiment, the reaction force component calculation unit 82 may not include the end reaction force calculation unit 92. Alternatively, the reaction force component calculation unit 82 may include, in addition to the end reaction force calculation unit 92, a calculation unit that calculates other reaction force that restricts steering of the steered wheels 5. Such other reaction force may be a reaction force that is applied when the voltage of the on-board power source B is reduced and the steered-side motor 32 cannot apply a sufficient steered force.

In the above embodiment, the steering system 2 to be controlled by the steering control device 1 has a linkless structure in which power transmission between the steering unit 4 and the steered unit 6 is separated. However, the invention is not limited to this, and the steering control device 1 may control a steering system having a structure in which power transmission between the steering unit 4 and the steered unit 6 is separable by a clutch.

Next, a technical idea that can be obtained from the above embodiment and modifications will be described.

A steering control device includes a target steered torque calculation unit that calculates target steered torque that is a target value of a steered force. The steering control device controls operation of a steered-side motor provided in a steered unit such that motor torque according to the target steered torque is generated. The target steered torque calculation unit calculates the target steered torque by performing steered angle feedback control that causes a corresponding steered angle that is an actual rotation angle to follow a target corresponding steered angle that is a target value of the rotation angle.

The ratio of an angle axial force in a distributed axial force decreases as the vehicle speed increases, and the ratio of a current axial force in the distributed axial force increases as the vehicle speed increases.

**Claims**

1. A steering control device that controls a steering system having a structure in which power transmission between a steering unit and a steered unit is mechanically separated, the steered unit being a unit that steers a steered wheel according to a steering operation that is input to the steering unit, the steering control device being configured to control operation of a steering-side motor provided in the steering unit such that motor torque according to target reaction torque is generated, and the target reaction torque being a target value of a steering reaction force that is a force against the steering operation that is input to the steering unit, the steering control device **characterized by** comprising a processor (1) configured to:

   calculate an axial force component corresponding to an axial force acting on a steered shaft that operates so as to steer the steered wheel;
   calculate a restriction reaction force to restrict a steering operation of the steered wheel in one direction such that a vehicle comes into a condition in which steering of the steered wheel in the one direction is restricted;
   calculate the target reaction torque based on a reaction force component obtained by adding the axial force component and the restriction reaction force; and
   limit an absolute value of the reaction force component to a limit value or less, the limit value being such a value that the reaction force component does not become too large.

2. The steering control device according to claim 1, **characterized in that** the processor (1) is configured to, as the restriction reaction force, calculate an obstacle contact reaction force to restrict a steering operation of the steered wheel toward an obstacle when the vehicle comes into a condition in which the steered wheel is in contact with the obstacle as a result of being steered.

3. The steering control device according to claim 1 or 2, wherein the processor (1) is configured to, as the restriction reaction force, calculate an end reaction force that is a reaction force against further turning of the steering unit when the absolute value of a steering angle of the steering unit approaches a limit steering angle.

4. The steering control device according to any one of claims 1 to 3, **characterized in that** the processor (1) has a reaction force component adjustment map that is used to adjust the reaction force component, and the processor (1) is configured to set the absolute value of the reaction force component after adjustment using the reaction force component adjustment map to the limit value or less.

5. The steering control device according to any one of claims 1 to 3, **characterized in that** the processor (1) is configured to adjust the limit value based on a vehicle speed.

# FIG. 1

FIG. 2

- 13 STEERING-SIDE MOTOR
- 32 STEERED-SIDE MOTOR

B 52
54 53
STEERING-SIDE DRIVE CIRCUIT
Ius, Ivs, Iws

B 57
59 58
STEERED-SIDE DRIVE CIRCUIT
Iut, Ivt, Iwt

Ms
51
63 STEERING-SIDE MOTOR CONTROL SIGNAL CALCULATION UNIT

Mt
56
73 STEERED-SIDE MOTOR CONTROL SIGNAL CALCULATION UNIT

Iqt

Ts*
62 TARGET REACTION TORQUE CALCULATION UNIT
θh*

Tt*
72 TARGET STEERED TORQUE CALCULATION UNIT

Δθp
74

θp
71 CORRESPONDING STEERED ANGLE CALCULATION UNIT

61 STEERING ANGLE CALCULATION UNIT
θh

θs
Th
V

θt

15

# FIG. 3

EP 3 715 219 A1

# FIG. 4

EP 3 715 219 A1

# FIG. 5

# FIG. 6

ADJUSTED
REACTION FORCE
COMPONENT Fir'

F l i m

LARGE

SMALL

REACTION FORCE
COMPONENT Fir
BEFORE ADJUSTMENT

Europäisches
Patentamt

European
Patent Office

Office européen
des brevets

# EUROPEAN SEARCH REPORT

Application Number

EP 20 16 6296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 604 670 B2 (NISSAN MOTOR [JP]) 28 March 2017 (2017-03-28) * column 22 - column 23 * ----- | 1,3-5 | INV. B62D6/00 B62D5/00 |
| A | US 9 623 901 B2 (NISSAN MOTOR [JP]) 18 April 2017 (2017-04-18) * column 14, line 66 - column 15, line 3 * ----- | 1 | |
| A | EP 1 407 959 A2 (TOYODA MACHINE WORKS LTD [JP]) 14 April 2004 (2004-04-14) * paragraph [0011] * * paragraph [0022] * * paragraph [0036] * ----- | 1 | |
| A | US 6 763 908 B2 (MITSUBISHI ELECTRIC CORP [JP]) 20 July 2004 (2004-07-20) * column 5, line 28 - line 34 * ----- | 1 | |

| | |
|---|---|
| | TECHNICAL FIELDS SEARCHED (IPC) |
| | B62D |

The present search report has been drawn up for all claims

| Place of search | Date of completion of the search | Examiner |
|---|---|---|
| The Hague | 12 August 2020 | Pemberton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 6296

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2020

| Patent document cited in search report | | Publication date | Patent family member(s) | | Publication date |
|---|---|---|---|---|---|
| US 9604670 | B2 | 28-03-2017 | CN | 105339241 A | 17-02-2016 |
| | | | EP | 3015343 A1 | 04-05-2016 |
| | | | JP | 5971417 B2 | 17-08-2016 |
| | | | JP | WO2014208248 A1 | 23-02-2017 |
| | | | MX | 345983 B | 01-03-2017 |
| | | | RU | 2016102613 A | 01-08-2017 |
| | | | US | 2016114832 A1 | 28-04-2016 |
| | | | WO | 2014208248 A1 | 31-12-2014 |
| US 9623901 | B2 | 18-04-2017 | CN | 104736416 A | 24-06-2015 |
| | | | EP | 2905207 A1 | 12-08-2015 |
| | | | JP | 5994861 B2 | 21-09-2016 |
| | | | JP | WO2014054476 A1 | 25-08-2016 |
| | | | US | 2015225014 A1 | 13-08-2015 |
| | | | WO | 2014054476 A1 | 10-04-2014 |
| EP 1407959 | A2 | 14-04-2004 | DE | 60307756 T2 | 13-09-2007 |
| | | | EP | 1407959 A2 | 14-04-2004 |
| | | | JP | 3908144 B2 | 25-04-2007 |
| | | | JP | 2004130971 A | 30-04-2004 |
| | | | US | 2004104066 A1 | 03-06-2004 |
| US 6763908 | B2 | 20-07-2004 | DE | 10259286 A1 | 04-09-2003 |
| | | | JP | 3593110 B2 | 24-11-2004 |
| | | | JP | 2003237604 A | 27-08-2003 |
| | | | US | 2003150666 A1 | 14-08-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017165219 A